# EUROPÄISCHE PATENTSCHRIFT

(11) **EP 3 128 579 B1**
(45) Veröffentlichungstag und Bekanntmachung des Hinweises auf die Patenterteilung: **25.09.2019**
(21) Anmeldenummer: 15180142.0
(22) Anmeldetag: 07.08.2015
(51) Int. Cl.: H01M 2/12, H01M 10/04, H01M 10/052, H01M 10/0583, H01M 10/48, B60L 3/00, B60L 3/04, B60L 58/21, B60L 50/64, H01M 2/26, H01M 2/34, H01M 4/38

(54) **BATTERIEZELLE**
BATTERY CELL
PILE DE BATTERIE

(43) Veröffentlichungstag der Anmeldung: 08.02.2017
(73) Patentinhaber: ROBERT BOSCH GMBH, 70442 Stuttgart (DE); GS Yuasa International Ltd., Kisshoin, Minami-ku, Kyoto-shi, Kyoto 601-8520 (JP)
(72) Erfinder: LEUTHNER, Stephan, 71229 Leonberg (DE); LIEBENOW, Cornelius, 70372 Stuttgart (DE)
(74) Vertreter: Isarpatent

(56) Entgegenhaltungen:
- DE-A1-102012 221 158
- DE-A1-102013 208 140
- US-A1- 2002 122 987

## Beschreibung

Die Erfindung betrifft eine Batteriezelle, welche ein Zellengehäuse, das eine Berstöffnung aufweist, und eine Elektrodeneinheit, die eine Anode und eine Kathode aufweist, umfasst.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybrid Electric Vehicle, HEV) sowie Plug-In-Hybridfahrzeugen (Plug-In-Hybrid Electric Vehicle, PHEV) zum Einsatz.

Eine gattungsgemäße Batteriezelle ist beispielsweise in der DE 10 2012 217 451 A1 offenbart. Die Batteriezelle weist ein Zellengehäuse auf, welches beispielsweise aus einem Metall gefertigt ist. Das Zellengehäuse ist prismatisch, insbesondere quaderförmig, ausgestaltet und druckfest ausgebildet. Die Batteriezelle weist dabei ein positives Terminal und ein negatives Terminal zur elektrischen Kontaktierung auf.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Aktivmaterial aufgebracht ist. Bei dem Aktivmaterial für die Kathode handelt es sich beispielsweise um ein Metalloxid. Bei dem Aktivmaterial für die Anode handelt es sich beispielsweise um Silizium oder um Graphit.

Die Elektroden der Batteriezelle sind folienartig ausgebildet und unter Zwischenlage eines Separators, welcher die Anode von der Kathode trennt, zu einem Elektrodenwickel gewunden. Ein solcher Elektrodenwickel wird auch als Jelly-Roll bezeichnet. Die Elektroden können auch zu einem Elektrodenstapel übereinander gestapelt sein. Die beiden Elektroden des Elektrodenwickels oder des Elektrodenstapels werden mittels Kollektoren elektrisch mit den Terminals der Batteriezelle verbunden.

Aus der DE 10 2012 223 796 A1 ist eine Batteriezelle mit einem Elektrodenwickel bekannt. Die Kollektoren sind dabei an gegenüberliegenden Seiten des Elektrodenwickels angeordnet.

Aus der DE 10 2012 221158 A1 ist ebenfalls eine Batteriezelle mit einem Berstventil bekannt. Aussparungen am Außenbereich des Wickelpaket erleichtern die Aufnahme des Flüssigelektrolyten.

Die US 2002/122987 A1 zeigt eine U-förmige Elektrodeneinheit mit einer verbesserten Gasabfuhr. Dabei wird zwischen den gebogenen Schenkeln einer Elektrode eine ungebogene Elektrode angeordnet.

Aus der US 2012/0113566 A1 ist eine Elektrodeneinheit für einen Kondensator oder eine Lithium-Ionen-Batterie bekannt, welche durch Aufeinanderlegen und einmaliges Falten der Elektroden entsteht. Die Elektrodeneinheit weist dabei einen U-förmigen Querschnitt.

Eine Batteriezelle mit einer Elektrodeneinheit, welche einen U-förmigen Querschnitt aufweist, ist auch aus der US 2014/0011063 A1 bekannt. Die Kollektoren zur Verbindung der Elektroden mit den Terminals der Batteriezelle ragen dabei auf der gleichen Seite aus der Elektrodeneinheit heraus.

### Offenbarung der Erfindung

Es wird eine Batteriezelle vorgeschlagen, die ein Zellengehäuse, welches eine Berstöffnung aufweist, und eine Elektrodeneinheit, welche eine Anode und eine Kathode aufweist, umfasst. Die Anode und die Kathode umfassen dabei jeweils mehrere Lagen, welche abwechselnd übereinander gelegt sind. Die Elektrodeneinheit weist eine Bodenseite, an der die Lagen der Anode und der Kathode umgebogen sind, und eine offene Stirnseite, die der Bodenseite gegenüber liegt, auf.

Erfindungsgemäß ist die Anode an einer ersten Schmalseite der Elektrodeneinheit mit einem ersten Kollektor verbunden, die Kathode ist an einer der ersten Schmalseite gegenüber liegenden zweiten Schmalseite der Elektrodeneinheit mit einem zweiten Kollektor verbunden, und die Stirnseite der Elektrodeneinheit ist der Berstöffnung des Zellengehäuses zugewandt.

Die Elektrodeneinheit weist dabei, bei Blick auf eine der beiden einander gegenüber liegenden Schmalseiten, einen zumindest annähernd U-förmigen Querschnitt auf.

Die Anode und die Kathode sind mittels der Kollektoren mit Terminals der Batteriezelle elektrisch verbunden, die an dem Zellengehäuse angeordnet sind. Die Terminals sind dabei von außerhalb des Zellengehäuses elektrisch kontaktierbar.

Vorzugsweise ist die Stirnseite der Elektrodeneinheit dabei vollständig frei von Kollektoren. Dadurch ist die freie Fläche der offenen Stirnseite maximal und ein Austritt einer Gaswolke aus dem Inneren der Elektrodeneinheit wird nicht durch Kollektoren behindert.

Die Elektrodeneinheit ist vorteilhaft derart ausgestaltet, dass die beiden Schmalseiten rechtwinklig zu der Stirnseite und rechtwinklig zu der Bodenseite orientiert sind.

Die einzelnen Lagen der Anode sowie der Kathode weisen vorteilhaft verschiedene Längen auf. Dabei weist die zentral in der Elektrodeneinheit angeordnete Lage die geringste Länge auf. Nach außen hin wachsen die Längen der einzelnen Lagen.

Gemäß einer vorteilhaften Weiterbildung ist zwischen den Lagen der Anode und der Kathode eine Funktionsschicht angeordnet ist. Die Funktionsschicht umfasst beispielsweise Sensoren zur Überwachung der Elektrodeneinheit. Vorzugsweise ragt die Funktionsschicht aus der Stirnseite der Elektrodeneinheit heraus und ist dort kontaktiert. Dadurch ist die Kontaktierung der Funktionsschicht nicht durch die Kollektoren behindert.

Die Berstöffnung des Zellengehäuses ist vorzugsweise von einer Berstscheibe verschlossen, welche nur im Fall eines Überdrucks innerhalb des Zellengehäuses öffnet.

Eine erfindungsgemäße Batteriezelle findet vorteilhaft Verwendung in einem Elektrofahrzeug (EV), in einem Hybridfahrzeug (HEV), in einem Plug-In-Hybridfahrzeug (PHEV), in einer stationären Batterie oder in einer Batterie in einer marinen Anwendung.

### Vorteile der Erfindung

Durch die erfindungsgemäße Ausgestaltung der Batteriezelle können Gase, die bei einem internen Fehler, beispielsweise bei einer Wärmefreisetzung durch einen Kurzschluss in der Elektrodeneinheit, entstehen, unmittelbar zu der Berstöffnung des Zellengehäuses geleitet werden und dort entweichen. Ein Druckaufbau innerhalb der Batteriezelle, der zu einem Aufblähen der Elektrodeneinheit sowie zu einer Verformung des Zellengehäuses führen könnte, ist damit vermieden.

Gegenüber einer Batteriezelle, deren Elektrodeneinheit als Elektrodenstapel ausgeführt ist, ist die Herstellung einer erfindungsgemäßen Batteriezelle einfacher und kostengünstiger. Zur Herstellung der Elektrodeneinheit mit einer Bodenseite, an der die Lagen der Anode und der Kathode umgebogen sind, und mit einer offene Stirnseite, die der Bodenseite gegenüber liegt, sind nur halb so viele aufwändige Stapelschritte erforderlich wie zur Herstellung eines Elektrodenstapels.

Ferner ist das Eindringen eines flüssigen Elektrolyten in die Elektrodeneinheit zwischen die Lagen der Anode und der Kathode durch die offene Stirnseite verhältnismäßig einfach möglich. Auch dadurch ist der Zeitaufwand zur Fertigung der Batteriezelle verkleinert. Auch das Einbringen einer zusätzlichen Funktionsschicht zwischen die Lagen der Anode und der Kathode in der Elektrodeneinheit ist vereinfacht möglich.

### Kurze Beschreibung der Zeichnungen

Ausführungsformen der Erfindung werden anhand der Zeichnungen und der nachfolgenden Beschreibung näher erläutert.
- Figur 1:: eine Explosionsdarstellung einer Batteriezelle,
- Figur 2:: eine schematische, halbtransparente Darstellung einer Batteriezelle,
- Figur 3:: Schritte eines Verfahrens zur Herstellung einer Elektrodeneinheit,
- Figur 4:: Schritte eines abgewandelten Verfahrens zur Herstellung einer Elektrodeneinheit,
- Figur 5:: eine gemäß einem der Verfahren nach Figur 3 oder Figur 4 hergestellte Elektrodeneinheit,
- Figur 6:: Schritte eines Verfahrens zur Herstellung einer abgewandelten Elektrodeneinheit und
- Figur 7:: eine Elektrodeneinheit vor und nach einem internen Fehler.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

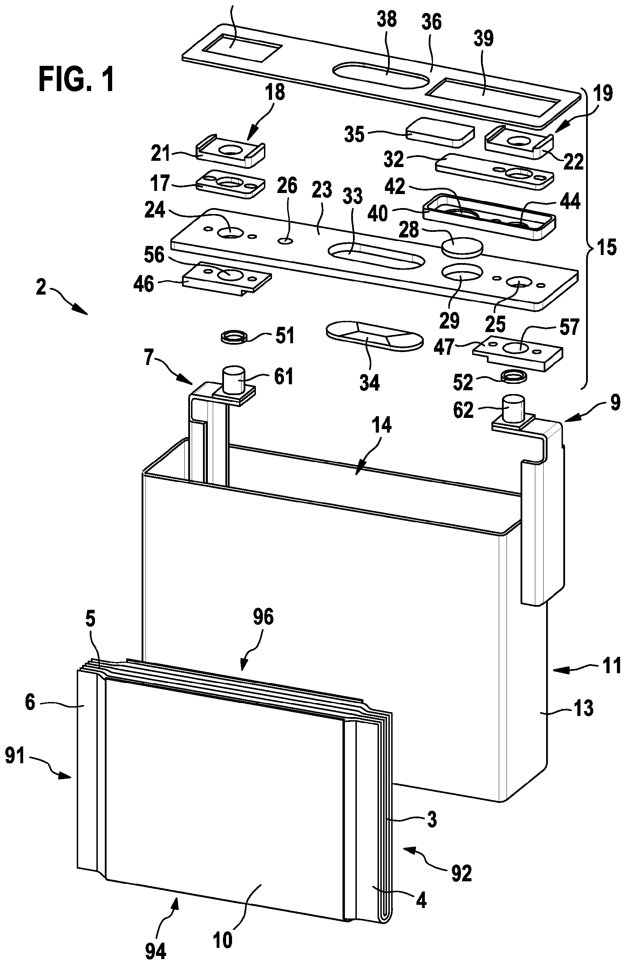

Eine in Figur 1 dargestellte Batteriezelle 2 umfasst ein Zellengehäuse 11, welches prismatisch, vorliegend quaderförmig, ausgebildet ist. Das Zellengehäuse 11 ist vorliegend elektrisch leitend ausgeführt und beispielsweise aus Aluminium gefertigt. Das Zellengehäuse 11 umfasst einen quaderförmigen Behälter 13, welcher an einer Seite eine Behälteröffnung 14 aufweist. Die Behälteröffnung 14 wird durch eine Deckelanordnung 15 verschlossen, welche unter anderem eine Deckplatte 23 umfasst. Der quaderförmigen Behälter 13 und die Deckplatte 23 des Zellengehäuses 11 sind dabei jeweils elektrisch leitend ausgeführt und beispielsweise aus Aluminium gefertigt.

Die Batteriezelle 2 umfasst ein negatives Terminal 21 und ein positives Terminal 22. Über die Terminals 21, 22 kann eine von der Batteriezelle 2 zur Verfügung gestellte Spannung abgegriffen werden. Ferner kann die Batteriezelle 2 über die Terminals 21, 22 auch geladen werden. Die Terminals 21, 22 sind beabstandet voneinander auf der Deckplatte 23 des prismatischen Zellengehäuses 11 angeordnet.

Innerhalb des Zellengehäuses 11 der Batteriezelle 2 ist eine Elektrodeneinheit 10 angeordnet, welcher zwei Elektroden, nämlich eine Anode 5 und eine Kathode 3 aufweist. Die Anode 5 und die Kathode 3 weisen dabei mehrere, beispielsweise zwischen vierzig und hundert, einzelne Lagen auf. Die Lagen der Anode 5 und der Kathode 3 sind jeweils folienartig ausgeführt und unter Zwischenlage eines in dieser Darstellung nicht sichtbaren Separators zu der Elektrodeneinheit 10 zusammen gefügt. Der Separator ist dabei elektrisch isolierend ausgebildet, aber ionisch leitfähig, also für Lithiumionen durchlässig.

Die Anode 5 umfasst ein anodisches Aktivmaterial, welches folienartig ausgeführt ist. Das anodische Aktivmaterial weist als Grundstoff Silizium oder eine Silizium enthaltende Legierung auf. Die Anode 5 umfasst ferner einen Stromableiter 6, welcher ebenfalls folienartig ausgebildet ist. Das anodische Aktivmaterial und der Stromableiter 6 der Anode 5 sind flächig aneinander gelegt und miteinander verbunden. Der Stromableiter 6 der Anode 5 ist elektrisch leitfähig ausgeführt und aus einem Metall gefertigt, beispielsweise aus Kupfer. Der Stromableiter 6 der Anode 5 steht auf einer ersten Schmalseite 91 über einen Rand der Elektrodeneinheit 10 über und ist mit einem ersten Kollektor 7 verbunden. Über den ersten Kollektor 7 ist der Stromableiter 6 der Anode 5 elektrisch mit dem negativen Terminal 21 der Batteriezelle 2 verbunden.

Die Kathode 3 umfasst ein kathodisches Aktivmaterial, welches folienartig ausgeführt ist. Das kathodische Aktivmaterial weist als Grundstoff ein Metalloxid auf, beispielsweise Lithium-Kobalt-Oxid (LiCoO₂). Die Kathode 3 umfasst ferner einen Stromableiter 4, welcher ebenfalls folienartig ausgebildet ist. Das kathodische Aktivmaterial und der Stromableiter 4 sind flächig aneinander gelegt und miteinander verbunden. Der Stromableiter 4 der Kathode 3 ist elektrisch leitfähig ausgeführt und aus einem Metall gefertigt, beispielsweise aus Aluminium. Der Stromableiter 4 der Kathode 3 steht auf einer zweiten Schmalseite 92, welche der ersten Schmalseite 91 gegenüber liegt, über einen Rand der Elektrodeneinheit 10 über und ist mit einem zweiten Kollektor 9 verbunden. Über den zweiten Kollektor 9 ist der Stromableiter 4 der Kathode 3 elektrisch mit dem positiven Terminal 22 der Batteriezelle 2 verbunden.

Die Elektrodeneinheit 10 weist bei Blick auf eine der beiden einander gegenüber liegenden Schmalseiten 91, 92 einen zumindest annähernd U-förmigen Querschnitt auf. An einer Bodenseite 94 sind die Anode 5 sowie die Kathode 3 um 180° umgebogen, und an einer der Bodenseite 94 gegenüber liegenden Stirnseite 96 ist die Elektrodeneinheit 10 offen. Die offene Stirnseite 96 ist dabei insbesondere frei von den Kollektoren 7, 9.

Der erste Kollektor 7, welcher sich innerhalb des Zellengehäuses 11 befindet, ist mittels einer ersten Kontaktanordnung 18 mit dem negativen Terminal 21 verbunden, welches sich außerhalb des Zellengehäuses 11 befindet. Der zweite Kollektor 9, welcher sich innerhalb des Zellengehäuses 11 befindet, ist mittels einer zweiten Kontaktanordnung 19 mit dem positiven Terminal 22 verbunden, welches sich außerhalb des Zellengehäuses 11 befindet.

Das Zellengehäuse 11 der Batteriezelle 2 ist mit einem flüssigen Elektrolyt gefüllt. Der Elektrolyt umgibt die Anode 5, die Kathode 3 und den Separator. Auch der Elektrolyt ist ionisch leitfähig. Der Elektrolyt wird nach dem Zusammenbau des Zellengehäuses 11 durch eine Einfüllöffnung 26 in der Deckplatte 23 in das Zellengehäuse 11 eingefüllt. Danach wird die Einfüllöffnung 26 mittels eines nicht dargestellten Dichtstopfens verschlossen.

Der erste Kollektor 7 ist mit einem ersten Anschlussbolzen 61 verbunden, welcher auf einer der Elektrodeneinheit 10 abgewandten Seite von dem ersten Kollektor 7 weg ragt. Der erste Anschlussbolzen 61 durchragt dabei eine erste Decköffnung 24 in der Deckplatte 23 der Deckelanordnung 15 und ist an seinem dem ersten Kollektor 7 abgewandten Ende mit dem negativen Terminal 21 verbunden.

Der zweite Kollektor 9 ist mit einem zweiten Anschlussbolzen 62 verbunden, welcher auf einer der Elektrodeneinheit 10 abgewandten Seite von dem zweiten Kollektor 9 weg ragt. Der zweite Anschlussbolzen 62 durchragt dabei eine zweite Decköffnung 25 in der Deckplatte 23 der Deckelanordnung 15 und ist an seinem dem zweiten Kollektor 9 abgewandten Ende mit dem positiven Terminal 22 verbunden.

Die Deckelanordnung 15 umfasst vorliegend eine Potentialplatte 17, welche elektrisch leitfähig ausgeführt ist, und welche zwischen der Deckplatte 23 und dem negativen Terminal 21 angeordnet ist. Die Potentialplatte 17 verbindet die Deckplatte 23 elektrisch mit dem negativen Terminal 21. Somit liegt das Zellengehäuse 11 auf dem gleichen elektrischen Potential wie das negative Terminal 21.

Die Deckelanordnung 15 umfasst ferner eine Verbindungsplatte 32, welche ebenfalls elektrisch leitfähig ausgeführt ist, und welche zwischen der Deckplatte 23 und dem positiven Terminal 22 angeordnet ist. Die Verbindungsplatte 32 ist elektrisch mit dem positiven Terminal 22 verbunden. Auf der der Deckplatte 23 abgewandten Seite der Verbindungsplatte 32, seitlich neben dem positiven Terminal 22, ist ferner eine Verbindungsplattenisolierung 35 angebracht, vorliegend aufgeklebt.

Zwischen der Deckplatte 23 und der Verbindungsplatte 32 ist ein cr 40 vorgesehen, welcher die Deckplatte 23 elektrisch von der Verbindungsplatte 32 und dem positiven Terminal 22 isoliert. Der Abstandsisolator 40 weist eine Durchgriffsöffnung 44 auf, welche von dem zweiten Anschlussbolzen 62 durchragt wird.

Die Deckelanordnung 15 umfasst auch eine Deckenplattenisolierfolie 36, welche auf der dem Behälter 13 abgewandten Seite der Deckplatte 23 aufgeklebt ist. Die Deckenplattenisolierfolie 36 weist eine erste Folienöffnung 37 auf, welche von dem negativen Terminal 21 und der Potentialplatte 17 durchragt wird. Die Deckenplattenisolierfolie 36 weist auch eine zweite Folienöffnung 38 auf, auf deren Funktion später eingegangen wird. Die Deckenplattenisolierfolie 36 weist auch eine dritte Folienöffnung 39 auf, welche von dem positiven Terminal 22, der Verbindungsplatte 32, der Verbindungsplattenisolierung 35 und dem Abstandsisolator 40 durchragt wird.

Zwischen der Deckplatte 23 und dem ersten Kollektor 7 ist ein erster Anschlussisolator 46 vorgesehen, welcher die Deckplatte 23 elektrisch von dem ersten Kollektor 7 isoliert. Der erste Anschlussisolator 46 weist eine erste Isolatoröffnung 56 auf, welche der erste Anschlussbolzen 61 durchgreift. Zwischen der Deckplatte 23 und dem zweiten Kollektor 9 ist ein zweiter Anschlussisolator 47 vorgesehen, welcher die Deckplatte 23 elektrisch von dem zweiten Kollektor 9 isoliert. Der zweite Anschlussisolator 47 weist eine zweite Isolatoröffnung 57 auf, welche der zweite Anschlussbolzen 62 durchgreift.

Ein erster Dichtring 51 ist zwischen dem ersten Anschlussbolzen 61 und der Deckplatte 23 angeordnet. Der erste Dichtring 51 ist dabei um den ersten Anschlussbolzen 61 herum gelegt und befindet sich in der ersten Decköffnung 24 der Deckplatte 23. Der erste Dichtring 51 isoliert den ersten Anschlussbolzen 61 elektrisch von der Deckplatte 23. Zusätzlich dichtet der erste Dichtring 51 die erste Decköffnung 24 luftdicht und flüssigkeitsdicht ab. Somit ist insbesondere ein Eindringen von Feuchtigkeit durch die erste Decköffnung 24 in das Zellengehäuse 11 hinein, sowie ein Austreten von Elektrolyt durch die erste Decköffnung 24 aus dem Zellengehäuse 11 heraus verhindert.

Ein zweiter Dichtring 52 ist zwischen dem zweiten Anschlussbolzen 62 und der Deckplatte 23 angeordnet. Der zweite Dichtring 52 ist dabei um den zweiten Anschlussbolzen 62 herum gelegt und befindet sich in der zweiten Decköffnung 25 der Deckplatte 23. Der zweite Dichtring 52 isoliert den zweiten Anschlussbolzen 62 elektrisch von der Deckplatte 23. Zusätzlich dichtet der zweite Dichtring 52 die zweite Decköffnung 25 luftdicht und flüssigkeitsdicht ab. Somit ist insbesondere ein Eindringen von Feuchtigkeit durch die zweite Decköffnung 25 in das Zellengehäuse 11 hinein, sowie ein Austreten von Elektrolyt durch die zweite Decköffnung 25 aus dem Zellengehäuse 11 heraus verhindert.

Die Deckplatte 23 des Zellengehäuses 11 umfasst ferner eine Berstöffnung 33, welche von einer Berstscheibe 34 verschlossen ist. Im Falle eines Überdrucks innerhalb des Zellengehäuses 11 öffnet die Berstscheibe 34, wodurch der Überdruck durch die Berstöffnung 33 nach außen entweichen kann. Dadurch wird ein Bersten des Zellengehäuses 11 verhindert. Die Berstöffnung 33 in der Deckplatte 23 fluchtet dabei mit der zweiten Folienöffnung 38 in der Deckenplattenisolierfolie 36.

Die Elektrodeneinheit 10 ist derart in dem Zellengehäuse 11 angeordnet, dass die Stirnseite 96 der Berstöffnung 33 zugewandt ist.

Die Batteriezelle 2 weist vorliegend auch eine Überladungsschutzvorrichtung (Overcharge Safety Device, OSD) auf. Die Überladungsschutzvorrichtung umfasst eine in der Deckplatte 23 des Zellengehäuses 11 vorgesehene OSD-Öffnung 29, welche von einer OSD-Membran 28 verschlossen ist. Die OSD-Membran 28 ist als dünne Metallfolie ausgeführt. Im Falle eines Überdrucks innerhalb des Zellengehäuses 11, welcher beispielsweise durch einen Temperaturanstieg infolge einer Überladung der Batteriezelle 2 eintreten kann, verformt sich die OSD-Membran 28 und berührt dabei die Verbindungsplatte 32. Der Abstandsisolator 40 weist dazu eine Kurzschlussöffnung 42 auf, welche die OSD-Membran 28 bei einer Verformung durchgreifen kann. Dadurch entsteht ein Kurzschluss zwischen dem Zellengehäuse 11 und dem zweiten Kollektor 9, wodurch ein Ladevorgang der Batteriezelle 2 unterbrochen wird.

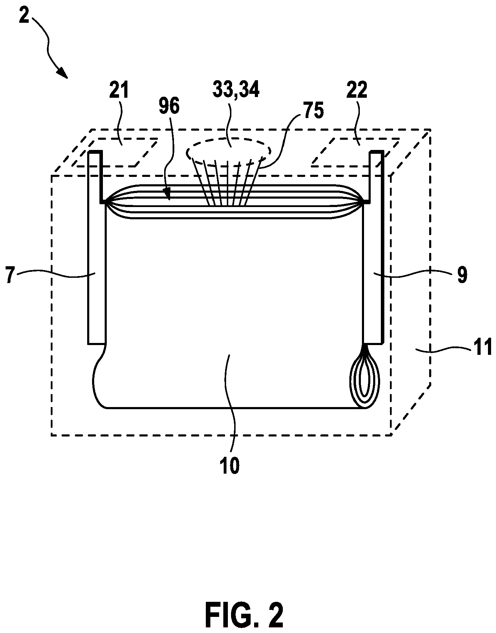

In Figur 2 ist eine schematische, halbtransparente Darstellung der Batteriezelle 2 im fertig montierten Zustand gezeigt. Bei der Darstellung nach Figur 2 ist es zu einem internen Kurzschluss gekommen, infolge dessen eine Freisetzung von Wärme in der Elektrodeneinheit 10 stattgefunden hat. Dabei ist eine Gaswolke 75 entstanden. Die Gaswolke 75 tritt durch die offene Stirnseite 96 der Elektrodeneinheit 10 aus und wird unmittelbar zu der Berstöffnung 33 des Zellengehäuses 11 geleitet. Dort entweicht die Gaswolke 75 durch die hier nicht dargestellte öffnende Berstscheibe 34 nach außen.

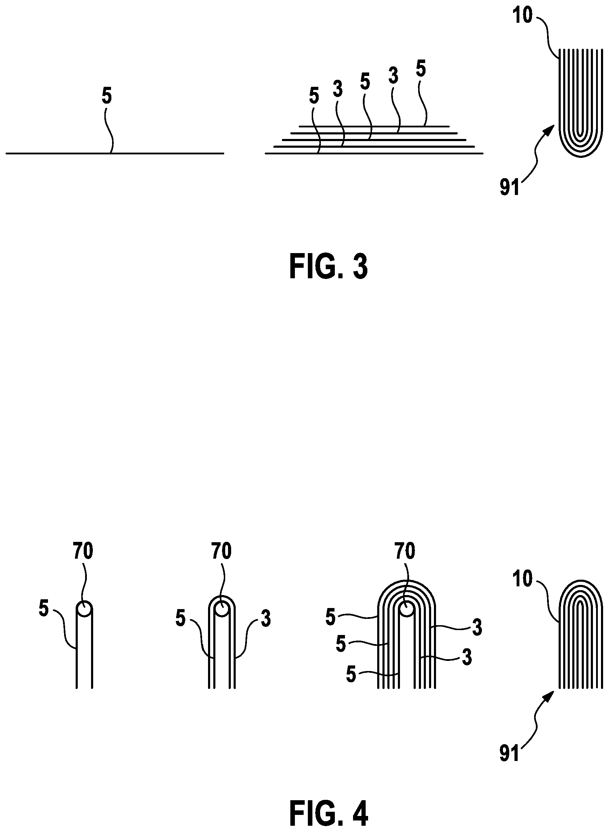

Schritte eines Verfahrens zur Herstellung einer Elektrodeneinheit 10 sind in Figur 3 dargestellt. Dabei werden zunächst abwechselnd je eine Lage der Anode 5 und der Kathode 3 unter Zwischenlage eines hier nicht dargestellten Separators übereinander gestapelt. Die untere Lage, vorliegend eine Lage der Anode 5, weist dabei die größte Länge auf. Jede darauf gestapelte Lage der Kathode 3 sowie der Anode 5 weist eine geringere Länge als die jeweils darunter angeordnete Lage auf.

Nachdem alle Lagen der Anode 5 sowie der Kathode 3 aufeinander gestapelt sind, wird der so erzeugte Stapel um 180° umgebogen. Durch die verschiedenen Längen der einzelnen Lagen der Anode 5 und der Kathode 3 werden die durch die Umbiegung entstehenden unterschiedlichen Biegeradien der einzelnen Lagen ausgeglichen.

In Figur 4 sind Schritte eines abgewandelten Verfahrens zur Herstellung einer Elektrodeneinheit 10 dargestellt. Dabei werden zunächst abwechselnd je eine Lage der Anode 5 und der Kathode 3 unter Zwischenlage eines hier nicht dargestellten Separators um einen Dorn 70 übereinander gelegt. Die innere Lage, vorliegend eine Lage der Anode 5, weist dabei die kleinste Länge auf. Jede darauf gelegte Lage der Kathode 3 sowie der Anode 5 weist eine größere Länge als die jeweils darunter angeordnete Lage auf.

Nachdem alle Lagen der Anode 5 sowie der Kathode 3 aufeinander auf den Dorn 70 gelegt sind, wird der Dorn 70 entfernt. Anschließend wird die Elektrodeneinheit 10 durch Aufbringen seitlicher Kräfte zusammengedrückt um das durch fehlenden den Dorn 70 freigegebene Volumen auszufüllen.

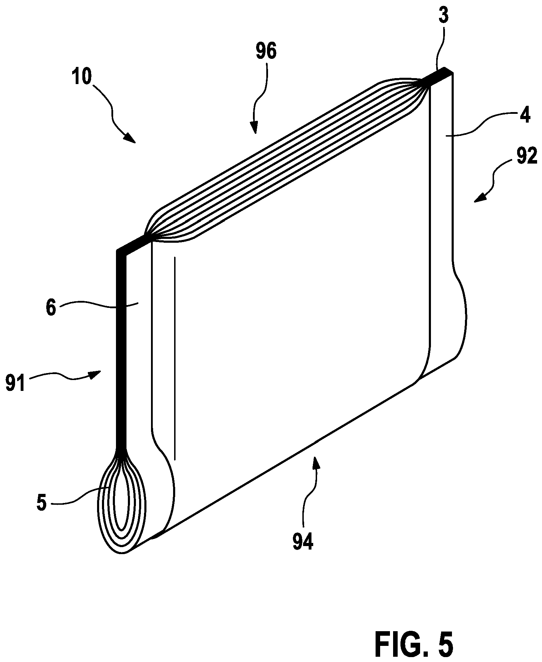

Eine gemäß einem der Verfahren nach Figur 3 oder Figur 4 hergestellte und noch weiter bearbeitete Elektrodeneinheit 10 ist in Figur 5 dargestellt. Die Schmalseiten 91, 92 sind rechtwinklig zu der Stirnseite 96 und zu der Bodenseite 94 orientiert.

Die auf der ersten Schmalseite 91 über einen Rand der Elektrodeneinheit 10 überstehenden Stromableiter 6 der einzelnen Lagen der Anode 5 sind dabei zusammengedrückt. Ebenso sind die auf der zweiten Schmalseite 92 über einen Rand der Elektrodeneinheit 10 überstehenden Stromableiter 4 der einzelnen Lagen der Kathode 3 zusammengedrückt. Durch das Zusammendrücken der Stromableiter 4, 6 ist eine, in der Regel stoffschlüssige, Verbindung mit den Kollektoren 7, 9 vereinfacht.

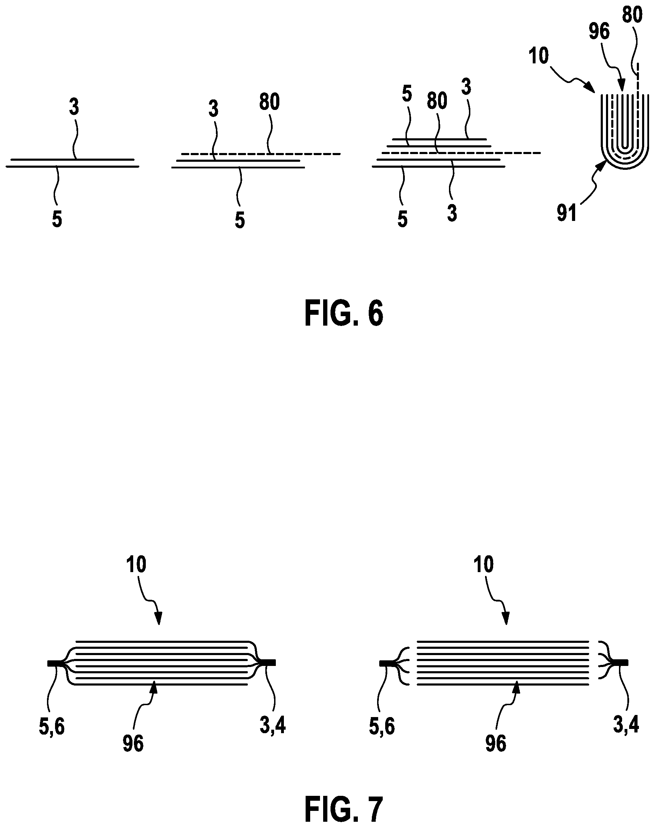

Schritte eines Verfahrens zur Herstellung einer abgewandelten Elektrodeneinheit 10 sind in Figur 6 gezeigt. Dabei werden, ähnlich wie bei dem in Figur 3 dargestellten Verfahren, zunächst abwechselnd je eine Lage der Anode 5 und der Kathode 3 unter Zwischenlage eines hier nicht dargestellten Separators übereinander gestapelt. Inmitten der Lagen der Anode 5 und der Kathode 3 wird eine folienartige Funktionsschicht 80 eingebracht. Die Funktionsschicht 80 umfasst vorliegend Temperatursensoren zur Überwachung der Temperatur der Elektrodeneinheit 10.

Die Funktionsschicht 80 ist dabei länger als die Lagen der Anode 5 und der Kathode 3. Die Funktionsschicht 80 ragt dadurch aus der Stirnseite 96 der Elektrodeneinheit 10 heraus. Die Funktionsschicht 80 ist an ihrem aus der Stirnseite 96 der Elektrodeneinheit 10 heraus ragenden Bereich kontaktiert, was in Figur 6 aber nicht dargestellt ist.

In Figur 7 ist eine Elektrodeneinheit 10 vor und nach einem internen Fehler, insbesondere einem Kurzschluss, dargestellt. Bedingt durch den internen Kurzschluss hat eine Freisetzung von Wärme in der Elektrodeneinheit 10 stattgefunden, wobei eine Gaswolke 75 entstanden ist. Dadurch ist ein kurzzeitiger Überdruck innerhalb der Elektrodeneinheit 10 entstanden, bevor die Gaswolke 75 durch die Berstöffnung 33 entwichen ist.

Durch den Überdruck sind die einzelnen Stromableiter 6 der Anode 5 und die einzelnen Stromableiter 4 der Kathode 3 abgerissen. Dadurch ist die elektrische Verbindung der Anode 5 sowie der Kathode 3 der Elektrodeneinheit 10 aufgetrennt.

Besagte Lagen der Stromableiter 4, 6 weisen vorliegend eine Dicke von etwa 10 Mikrometern auf. Die Lagen der Stromableiter 4, 6 bilden somit eine Sollbruchstelle für den Fall eines internen Fehlers in der Elektrodeneinheit 10 mit dabei entstehendem Überdruck.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batteriezelle (2), umfassend
ein Zellengehäuse (11), welches eine Berstöffnung (33) aufweist, und eine Elektrodeneinheit (10), welche eine Anode (5) und eine Kathode (3) aufweist, wobei
die Anode (5) und die Kathode (3) jeweils mehrere Lagen umfassen, welche abwechselnd übereinander gelegt sind, wobei die Elektrodeneinheit (10) eine Bodenseite (94), an der die Lagen der Anode (5) und der Kathode (3) umgebogen sind, und
eine der Bodenseite (94) gegenüber liegende offene Stirnseite (96) aufweist,
**dadurch gekennzeichnet, dass**
die Anode (5) an einer ersten Schmalseite (91) der Elektrodeneinheit (10) mit einem ersten Kollektor (7) verbunden ist, dass die Kathode (3) an einer der ersten Schmalseite (91) gegenüber liegenden zweiten Schmalseite (92) der Elektrodeneinheit (10) mit einem zweiten Kollektor (9) verbunden ist, und dass die Stirnseite (96) der Berstöffnung (33) zugewandt ist.

2. Batteriezelle (2) nach Anspruch 1, **dadurch gekennzeichnet, dass**
die Elektrodeneinheit (10) einen U-förmigen Querschnitt aufweist.

3. Batteriezelle (2) nach einem der vorstehenden Ansprüche, **dadurch gekennzeichnet, dass**
die Anode (5) und die Kathode (3) mittels der Kollektoren (7, 9) mit an dem Zellegehäuse (11) angeordneten Terminals (11, 12) elektrisch verbunden sind.

4. Batteriezelle (2) nach einem der vorstehenden Ansprüche, **dadurch gekennzeichnet, dass**
die Stirnseite (96) frei von Kollektoren (7, 9) ist.

5. Batteriezelle (2) nach einem der vorstehenden Ansprüche, **dadurch gekennzeichnet, dass**
die Schmalseiten (91, 92) rechtwinklig zu der Stirnseite (96) und zu der Bodenseite (94) orientiert sind.

6. Batteriezelle (2) nach einem der vorstehenden Ansprüche, **dadurch gekennzeichnet, dass**
die einzelnen Lagen der Anode (5) sowie der Kathode (3) verschiedene Längen aufweisen.

7. Batteriezelle (2) nach einem der vorstehenden Ansprüche, **dadurch gekennzeichnet, dass**
zwischen den Lagen der Anode (5) und der Kathode (3) eine Funktionsschicht (80) angeordnet ist.

8. Batteriezelle (2) nach Anspruch 7, **dadurch gekennzeichnet, dass** die Funktionsschicht (80) aus der Stirnseite (96) heraus ragt.

9. Batteriezelle (2) nach einem der vorstehenden Ansprüche, **dadurch gekennzeichnet, dass**
die Berstöffnung (33) von einer Berstscheibe (34) verschlossen ist.

10. Verwendung einer Batteriezelle (2) nach einem der vorstehenden Ansprüche in einem Elektrofahrzeug (EV), in einem Hybridfahrzeug (HEV), in einem Plug-In-Hybridfahrzeug (PHEV), in einer stationären Batterie oder in einer Batterie in einer marinen Anwendung.

## Claims

1. Battery cell (2), comprising
a cell housing (11), which has a bursting opening (33), and
an electrode unit (10), which has an anode (5) and a cathode (3), wherein
the anode (5) and the cathode (3) each comprise a plurality of layers, which are placed one above the other in alternation, wherein
the electrode unit (10) has a bottom side (94), at which the layers of the anode (5) and the cathode (3) are bent over, and
an open front side (96) opposite the bottom side (94), **characterized in that**
the anode (5) is connected at a first narrow side (91) of the electrode unit (10) to a first collector (7),
**in that** the cathode (3) is connected at a second narrow side (92) of the electrode unit (10), said second narrow side being opposite the first narrow side (91), to a second collector (9), and
**in that** the front side (96) faces towards the bursting opening (33).

2. Battery cell (2) according to Claim 1, **characterized in that**
the electrode unit (10) has a U-shaped cross section.

3. Battery cell (2) according to either of the preceding claims, **characterized in that** the anode (5) and the cathode (3) are electrically connected to terminals (11, 12) arranged on the cell housing (11) by means of the collectors (7, 9).

4. Battery cell (2) according to one of the preceding claims, **characterized in that**
the front side (96) is free of collectors (7, 9).

5. Battery cell (2) according to one of the preceding claims, **characterized in that**
the narrow sides (91, 92) are oriented at a right angle to the front side (96) and to the bottom side (94).

6. Battery cell (2) according to one of the preceding claims, **characterized in that**
the individual layers of the anode (5) and of the cathode (3) have different lengths.

7. Battery cell (2) according to one of the preceding claims, **characterized in that**
a functional layer (80) is arranged between the layers of the anode (5) and of the cathode (3).

8. Battery cell (2) according to Claim 7, **characterized in that**
the functional layer (80) projects out of the front side (96).

9. Battery cell (2) according to one of the preceding claims, **characterized in that**
the bursting opening (33) is closed by a bursting disc (34) .

10. Use of a battery cell (2) according to one of the preceding claims in an electric vehicle (EV), in a hybrid vehicle (HEV), in a plug-in hybrid vehicle (PHEV), in a stationary battery or in a battery in a marine application.

## Revendications

1. Cellule (2) de batterie comprenant :
un boîtier (11) de cellule présentant une ouverture d'éclatement (33) et
une unité d'électrode (10) présentant une anode (5) et une cathode (3),
l'anode (5) et la cathode (3) comprenant plusieurs couches posées en alternance les unes au-dessus des autres,
l'unité (10) d'électrodes présentant un fond (94) autour duquel les couches de l'anode (5) et de la cathode (3) sont rabattues et
un côté frontal ouvert (96) situé face au fond (94),
**caractérisé en ce que**
sur un premier côté étroit (91) de l'unité (10) d'électrodes, l'anode (5) est reliée à un premier collecteur (7),
**en ce que** sur un deuxième côté étroit (92) situé face au premier côté étroit (91) de l'unité (10) d'électrodes, la cathode (3) est reliée à un deuxième collecteur (9) et
**en ce que** le côté frontal (96) est tourné vers l'ouverture d'éclatement (33).

2. Cellule (2) de batterie selon la revendication 1, **caractérisé en ce que** la section transversale de l'unité (10) d'électrodes a la forme d'un U.

3. Cellule (2) de batterie selon l'une des revendications précédentes, **caractérisé en ce que**
l'anode (5) et la cathode (3) sont reliées électriquement au moyen des collecteurs (7, 9) à des bornes (11, 12) disposées sur le boîtier (11) de cellule.

4. Cellule (2) de batterie selon l'une des revendications précédentes, **caractérisé en ce que**
le côté frontal (96) est exempt de collecteurs (7, 9) .

5. Cellule (2) de batterie selon l'une des revendications précédentes, **caractérisé en ce que**
les côtés étroits (91, 92) sont orientées perpendiculairement au côté frontal (96) et au fond (94) .

6. Cellule (2) de batterie selon l'une des revendications précédentes, **caractérisé en ce que**
les différentes couches de l'anode (5) et de la cathode (3) ont des longueurs différentes.

7. Cellule (2) de batterie selon l'une des revendications précédentes, **caractérisé en ce qu'**
une couche fonctionnelle (80) est disposée entre les couches de l'anode (5) et de la cathode (3).

8. Cellule (2) de batterie selon la revendication 7, **caractérisé en ce que**
la couche fonctionnelle (80) déborde hors du côté frontal (96).

9. Cellule (2) de batterie selon l'une des revendications précédentes, **caractérisé en ce que**
l'ouverture d'éclatement (33) est fermée par une plaque d'éclatement (34).

10. Utilisation d'une cellule (2) de batterie selon l'une des revendications précédentes dans un véhicule électrique (EV), un véhicule hybride (HEV), un véhicule hybride (PHEV) pouvant être raccordé au réseau, une batterie stationnaire ou une batterie pour application marine.
